# EUROPÄISCHE PATENTANMELDUNG

(11) **EP 4 253 131 A1**
(43) Veröffentlichungstag der Anmeldung: **04.10.2023**
(21) Anmeldenummer: 22165109.4
(22) Anmeldetag: 29.03.2022
(51) Int. Cl.: B60L 53/63, B60L 53/67

(54) **VERFAHREN, LADESYSTEM UND COMPUTERPROGRAMMPRODUKT ZUM NETZDIENLICHEN LADEN EINES ELEKTRISCH BETRIEBENEN FAHRZEUGS**

(71) Anmelder: Siemens Aktiengesellschaft, 80333 München (DE)
(72) Erfinder: Hammer, Thomas, 91334 Hemhofen (DE); Hertlein, Timo Alexander, 96050 Bamberg (DE); Mladenovic, Ivana, 90556 Seukendorf (DE)
(74) Vertreter: Siemens Patent Attorneys

(57) **Zusammenfassung**

Die Erfindung betrifft ein Verfahren, ein Ladesystem und ein Computerprogrammprodukt zum netzdienlichen Laden eines elektrisch betriebenen Fahrzeugs in einem Ladesystem mit mehreren Schritten. Zunächst erfolgt das Bereitstellen eines ersten Datensatzes von Fahrzeugdaten wenigstens eines Fahrzeugs, das Bereitstellen eines zweiten Datensatzes von Ladeinfrastrukturdaten, das Bereitstellen eines dritten Datensatzes von Buchungsdaten, und das Bereitstellen eines vierten Datensatzes von Netzdaten. Weiterhin erfolgt das Bereitstellen einer Zielfunktion für ein Optimierungsverfahren, wobei die Zielfunktion die Information der Datensätze als Parameter umfasst. Anschließend erfolgt das Durchführen eines Optimierungsprozesses, welcher unter Berücksichtigung der Datensätze eine geeignete Ladesäule ermittelt, in einer Recheneinheit. Abschließend erfolgt das Laden des Fahrzeugs an der ermittelten Ladesäule.

## Beschreibung

Die Erfindung betrifft ein Verfahren, ein Ladesystem und ein Computerprogrammprodukt zum netzdienlichen Laden eines elektrisch betriebenen Fahrzeugs.

Die Anzahl an elektrisch betriebenen Fahrzeugen im Straßenverkehr nimmt stetig zu. Insbesondere das Ziel einer nachhaltigen Verkehrswirtschaft erfordert den Einsatz einer hohen Zahl an elektrisch betriebenen Fahrzeugen.

Diese elektrisch betriebenen Fahrzeuge müssen regelmäßig geladen werden. Die Ladeinfrastruktur befindet sich derzeit im Aufbau. Allerdings ist das Stromnetz häufig nicht ausreichend auf das zeitgleiche Laden vieler Elektrofahrzeuge ausgelegt. Somit ist es wichtig, die Ladeinfrastruktur in Verbindung mit dem Stromnetz stabil zu betreiben, ohne destabilisierende Schwankungen im Stromnetz zu erzeugen. Insbesondere bei sprunghaft auftretenden Leistungsanforderungen ist die Stabilität des Stromnetzes gefährdet. Weiterhin können Ladeprozesse insbesondere gebündelt auftreten, beispielsweise in Parkhäusern. Ladeinfrastruktur kann aber auch dezentral über das Stromnetz verteilt werden.

Derzeit wählt ein Benutzer eines elektrisch betriebenen Fahrzeugs seine Ladesäule händisch nach eigenen Anforderungen aus. Dafür nimmt der Fahrer insbesondere den Ort der Ladeinfrastruktur, also der Ladesäule, wie auch den Anbieter einer Ladeleistung in Betracht. Nachteilig wird bei dem derzeitigen Vorgehen nicht berücksichtigt, ob eine konkrete Ladeinfrastruktur in Verbindung mit dem Stromnetz und dessen Auslastung ein geeigneter Ladepunkt darstellt. Dies kann nachteilig zu einer Schwankung im Stromnetz führen. Besonders nachteilig kann es zu einem Zusammenbruch der Stromversorgung kommen.

Aufgabe der vorliegenden Erfindung ist es daher ein Verfahren, ein Ladesystem und ein Computerprogrammprodukt anzugeben, welches ein netzdienliches Laden für elektrische Fahrzeuge ermöglicht.

Die Aufgabe wird erfindungsgemäß mit einem Verfahren gemäß Anspruch 1, einem Ladesystem gemäß Anspruch 14 und einem Computerprogrammprodukt gemäß Anspruch 15 gelöst.

Das erfindungsgemäße Verfahren zum netzdienlichen Laden eines elektrischen betriebenen Fahrzeugs an einem Ladesystem umfasst mehrere Schritte. Zunächst erfolgt das Bereitstellen eines ersten Datensatzes von Fahrzeugdaten wenigstens eines Fahrzeugs. Weiterhin wird ein zweiter Datensatz von Ladeinfrastrukturdaten bereitgestellt. Weiterhin wird ein dritter Datensatz von Buchungsdaten und ein vierter Datensatz von Netzdaten bereitgestellt. Weiterhin wird eine Zielfunktion für ein Optimierungsverfahren bereitgestellt, wobei die Zielfunktion die Information der Datensätze als Parameter umfasst. Anschließend erfolgt das Durchführen eines Optimierungsprozesses, welcher unter Berücksichtigung der Datensätze eine geeignete Ladesäule ermittelt, in einer Recheneinheit. Anschließend erfolgt das Laden des Fahrzeugs an der ermittelten Ladesäule.

Das erfindungsgemäße Ladesystem für das erfindungsgemäße Verfahren zum Laden eines elektrisch betriebenen Fahrzeugs umfasst wenigstens zwei Ladesäulen und ein die Ladesäulen verbindendes Stromnetz, welche eine Ladeinfrastruktur bilden. Weiterhin umfasst sie eine Stromnetzüberwachungseinheit, welche geeignet ist zum Bereitstellen von Netzdaten. Das Ladesystem umfasst weiterhin eine Recheneinheit, welche geeignet ist zum Erfassen und Bereitstellen der Datensätze und Durchführen des Optimierungsprozesses.

Das erfindungsgemäße Computerprogrammprodukt, welches direkt in einen Speicher einer programmierbaren Recheneinheit eines Ladesystem ladbar ist, umfasst Programmcodemittel, um das erfindungsgemäße Verfahren auszuführen, wenn das Computerprogrammprodukt in der Recheneinheit des Ladesystems ausgeführt wird.

Durch das Einbinden der unterschiedlichen Datensätze in eine Entscheidung für eine konkrete Ladeinfrastruktur, in anderen Worten eine Ladesäule, wird vorteilhaft der Ladepunkt ausgesucht, der ein netzdienliches Laden ermöglicht.

Als netzdienlich wird hier verstanden, dass die Bereitstellung der elektrischen Leistung dem Stromnetz nutzt. Insbesondere wenn viel erneuerbare Energien durch viel Sonne oder starken Wind im Stromnetz zur Verfügung stehen, kann ein elektrisch betriebenes Fahrzeug mit hoher Leistung geladen werden. In Zeiten, zu denen die Netzauslastung bereits sehr hoch ist und insbesondere wenig erneuerbare Energien zur Verfügung stehen, wird die Auswahl des Ladepunkts und die Höhe der Ladeleistung vorteilhaft derart gewählt werden, dass das Netz nicht zusätzlich beansprucht wird. Hierbei kommt es nicht nur auf die mittlere Belastung des gesamten Stromnetzes an, sondern auch auf die Belastung einzelner Netzabschnitte. So kann z.B. in einem verzweigten Netz die Belastung in einem Zweig des Stromnetzes niedrig sein, weil dort wenig elektrische Leistung abgerufen wird, während in einem anderen Zweig durch Abruf elektrischer Leistung von einer Vielzahl von Verbrauchern bereits eine Überlastsituation auftritt. Der Ladepunkt wird dann vorteilhaft in dem Zweig des Stromnetzes mit niedriger Belastung ermittelt.

Weiterhin kommt es für ein stabiles Stromnetz nicht nur auf eine zentrale Einspeisung an, sondern auch auf Zwischeneinspeisung elektrischer Energie aus erneuerbaren Quellen, deren Durchleitung die Last in einzelnen Netzabschnitten erhöhen kann. Vorteilhaft werden Ladepunkte netzdienlich derart ermittelt, dass die Überlastung einzelner Zweige eines verzweigten Verteilnetzes vermieden und Durchleitungsverluste aus Zwischeneinspeisung minimiert werden.

Weiterhin ist es vorteilhaft möglich das Laden einer Fahrzeugflotte möglichst abgestimmt, also insbesondere in Abhängigkeit der Buchungsdaten und Infrastrukturdaten, und dabei netzdienlich, also insbesondere in Abhängigkeit der Netzdaten (Auslastung, bereitstellbare Leistung) durchzuführen. Insbesondere Fahrzeugflotten, welche beispielsweise über Carsharing verbunden sind, verfügen nicht über eine eigene Ladeinfrastruktur. Sie bedienen sich typischerweise der öffentlichen Ladeinfrastruktur.

Die Datensätze gehen in anderen Worten als Anforderungen in den Optimierungsprozess ein. Sie werden insbesondere in einem Vektor zusammengefasst. Die Auswahl eines Ladepunktes erfolgt mittels der Minimierung der Abweichung von dem Anforderungsvektor.

In einer vorteilhaften Ausgestaltung und Weiterbildung der Erfindung werden als Fahrzeugdaten der Ladestand des Fahrzeugs und Ort des Fahrzeugs bereitgestellt. Weiterhin kann als Fahrzeugdaten die Ladeleistung des Fahrzeugs bereitgestellt werden. Zusätzlich kann die Batteriekapazität des Fahrzeugs bereitgestellt werden. Anstelle oder zusätzlich zum Ladestand kann auch eine verbleibende Reichweite des Fahrzeugs als Fahrzeugdaten bereitgestellt werden. Vorteilhaft ermöglicht das Bereitstellen der Fahrzeugdaten eine individuelle Zuweisung des Ladepunktes in Abhängigkeit des Aufenthaltsortes des elektrischen Fahrzeugs.

In einer weiteren vorteilhaften Ausgestaltung und Weiterbildung der Erfindung werden als Ladeinfrastrukturdaten Standorte von Ladesäulen, Auslastungsdaten der Ladesäulen und/oder fehlerhafte Ladesäulen bereitgestellt. Weiterhin können die minimale und maximale Ladeleistung der einzelnen Ladesäulen bereitgestellt werden. Auf Basis dieser Daten kann für einen Kunden im Zusammenhang mit seinen persönlichen Anforderungen, also den Buchungsdaten, eine Entscheidung für einen Ladepunkt mit angeforderter Leistung erfolgen.

In einer weiteren vorteilhaften Ausgestaltung und Weiterbildung der Erfindung werden als Buchungsdaten zeitliche Anforderungsdaten für eine Ladesäule und örtliche Anforderungsdaten bereitgestellt. Zeitliche Anforderungsdaten können Zeiträume in der Gegenwart oder in der Zukunft bestimmen. Örtliche Anforderungsdaten können insbesondere Straßenzüge, Stadtteile oder Betriebsgelände beschreibende Lokalisierungsdaten sein. Buchungsdaten können insbesondere auch von einem Nutzer erstellt werden. Buchungsdaten beschreiben die Anforderungen, die ein Fahrer, Fahrzeugflottenbetreiber oder Fahrzeughersteller an den nächsten (oder einen darauf folgenden) Ladevorgang hat. Vorteilhaft werden somit nicht nur technische Daten wie die Fahrzeugdaten oder Ladeinfrastrukturdaten in die Auswahl einer Ladesäule für ein letztendliches Laden einbezogen, sondern der Nutzer kann auch seine Präferenzen für einen Ort und einen Ladezeitraum angeben. Buchungsdaten können aber auch alle Zeiträume und Orte umfassen, sodass Buchungsdaten keine Einschränkung auf die Auswahl einer möglichen Ladesäule zum netzdienlichen Laden haben. Weiterhin ist es möglich, dass Buchungsdaten nicht von einem Fahrzeugbetreiber, sondern insbesondere von einem FahrzeugflottenBetreiber übermittelt werden. In diesem Fall werden bei den Buchungsdaten auch solche Daten berücksichtigt, welche eine Benutzung des CarSharing Autos in der Zukunft, insbesondere in einem Zeitraum von 48 Stunden, berücksichtigen. Vorteilhaft kann somit das netzdienliche Laden optimiert auf eine Fahrzeugflotte (in anderen Worten unabhängig vom Ladeort im Sinne von verteilten Fahrzeugen und nicht der Ansammlung der Fahrzeuge in einem Depot) erfolgen.

In einer weiteren vorteilhaften Ausgestaltung und Weiterbildung der Erfindung werden als Buchungsdaten Nachhaltigkeitsanforderungsdaten oder Preisanforderungsdaten bereitgestellt. Insbesondere ist es möglich, somit nicht nur netzdienlich zu laden, sondern sein Fahrzeug insbesondere nachhaltig, also über grünen Strom aus Wind und Sonne bevorzugt zu laden. Weiterhin können solche Ladesäulen präferiert ermittelt werden, welche einen günstigen Preis für eine bereitzustellende Leistung anbieten.

In einer weiteren vorteilhaften Ausgestaltung und Weiterbildung der Erfindung werden als Netzdaten eine Netzauslastung und/oder eine verfügbare Leistung in den Netzabschnitten eines verzweigten Verteilnetzes bereitgestellt. Unter Netzauslastung in einem Netzabschnitt, auch Zweig genannt, wird hier der aktuell vorliegende Lastfluss im Verhältnis zu einem aktuell zulässigen Lastfluss verstanden. Besonders vorteilhaft erfolgt das Laden des Fahrzeugs netzdienlich, also so dass das Netz insbesondere stabilisiert wird oder, beim zur Verfügung stehen von viel erneuerbarer Energie, entlastet wird, bzw. das Abriegeln erneuerbarer Energieerzeugung vermieden wird.

In einer weiteren vorteilhaften Ausgestaltung und Weiterbildung der Erfindung wird die mittels des Optimierungsverfahrens ermittelte Ladesäule an das Fahrzeug übermittelt und eine Navigationseinheit, insbesondere die des Fahrzeugs, ermittelt eine Route zur entsprechenden Ladesäule. Vorteilhaft wird somit sichergestellt, dass eine Ladesäule verfügbar ist, funktioniert, die angeforderte Leistung bereitstellen kann und das Stromnetz angemessen belastet.

In einer weiteren vorteilhaften Ausgestaltung und Weiterbildung der Erfindung wird eine netzdienliche Ladeleistung der Ladesäule ermittelt und die Ladeleistung wird an die Ladesäule und/oder das Fahrzeug übermittelt. Besonders vorteilhaft wird somit die Leistung des elektrischen Stromnetzes beansprucht, die das Stromnetz stabil bereitstellen kann. So kann zum Beispiel mit geringer Leistung über längere Zeit geladen werden, wenn dies aufgrund der Buchungsanforderungen möglich ist. Dadurch kann vorteilhaft die Anzahl der in einem Verteilnetz gleichzeitig ladbaren Fahrzeuge vergrößert werden, ohne das Netz ausbauen zu müssen. Alternativ kann mit hoher Leistung geladen werden, wenn insbesondere viel erneuerbare Energie im Stromnetz bereitgestellt werden kann und verbraucht werden sollte. Damit wird die Abregelung erneuerbarer Quellen vermieden. Besonders vorteilhaft ist es, wenn der Ladepunkt in der Nähre des Einspeisepunktes der erneuerbaren Quelle liegt, um Durchleitungsverluste zu minimieren.

In einer weiteren vorteilhaften Ausgestaltung und Weiterbildung der Erfindung erfolgt das Anschließen und/oder Abkoppeln des Fahrzeugs automatisiert, insbesondere mittels eines Roboters oder Roboterarms. Somit ist es vorteilhaft möglich, ein Fahrzeug auf einen Parkplatz oder eine andere Abstellmöglichkeit bereitzuhalten, dafür dass ein zeitlich früherer Ladevorgang beendet ist, nachdem der Fahrzeugnutzer das Fahrzeug abgesperrt hat. Nach Beendigung des Ladevorganges des zuerst ladenden Fahrzeuges kann durch den Roboter oder Roboterarm automatisch der Ladestecker abgesteckt und das nachfolgend abgestellte Fahrzeug angesteckt und geladen werden. Dies vergrößert die Auswahlmöglichkeiten der Ladeinfrastruktur vorteilhaft deutlich, da die Ladeinfrastruktur nicht sofort am Ladeplatz frei zur Verfügung stehen muss. Weiterhin ist es vorteilhaft möglich, Fahrzeuge einer Fahrzeugflotte insbesondere eines CarSharings, als Benutzer an einer Ladesäule abzustellen, wobei die Ladesäule automatisiert mit dem Fahrzeug zum Laden verbunden wird und auch nach dem Ladevorgang wieder automatisiert entkoppelt wird. Somit wird vorteilhaft die Ladesäule nicht unnötig lang beansprucht. Weiterhin muss ein Fahrzeugnutzer nicht warten, bis das Fahrzeug wieder vollgeladen ist und anschließend wiederum das Auto händisch abkoppeln, was das Leihen eines CarSharing Autos, welches elektrisch betrieben wird, gegenüber dem Leihen eines konventionell betriebenen Fahrzeugs deutlich komplizierter gestaltet.

In einer weiteren vorteilhaften Ausgestaltung und Weiterbildung erfolgt die Auswahl des Fahrzeugs der Fahrzeugflotte basierend auf den Datensätzen und der ermittelten Ladesäule. In anderen Worten kann ein Fahrzeug einer CarSharing Flotte nicht nur unter Berücksichtigung seines Standorts und Ladezustands für einen Nutzer freigeschaltet werden, sondern der geplante Ladevorgang kann mit einbezogen werden. Somit ist es möglich auch Fahrzeuge auszuwählen, welche derzeit noch nicht vollständig oder ausreichend geladen sind.

In einer weiteren vorteilhaften Ausgestaltung und Weiterbildung der Erfindung werden als sechster Datensatz Verkehrsüberwachungsdaten bereitgestellt. Somit kann das Einbeziehen der Route vom Standort des Fahrzeugs bis zur möglichen Ladesäule unter Berücksichtigung der aktuellen Verkehrslage in die Optimierung zum Ermitteln der Ladesäule noch mal verbessern.

In einer weiteren vorteilhaften Ausgestaltung und Weiterbildung der Erfindung werden alle Datensätze in einem Cloudserver gespeichert. Vorteilhaft können die Daten somit ortsunabhängig abgerufen werden. Eine netzdienliche Auswahl der Ladesäule ist somit vorteilhaft an allen Standorten möglich, solange ein Zugriff auf die Cloud möglich ist.

In einer weiteren vorteilhaften Ausgestaltung und Weiterbildung der Erfindung können die Datensätze für einen netzdienlichen Vehicle-to-Grid (V2G) Einsatz von Elektrofahrzeugen genutzt werden. Auf der Basis der Daten der Netzauslastung und der Buchungsdaten sowie weiterer verfügbarer Daten (Prognosedaten usw.) können die an den Ladesäulen angeschlossenen Fahrzeuge als mobiler Speicher verwendet werden und Strom an das Stromnetz zurückgeben. Durch die verfügbaren Daten und die Zielfunktion in der Recheneinheit können sowohl Lade- als auch Entladeprozesse optimal auf das Netz sowie auf die Anforderungen von Nutzern abgestimmt werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: zeigt ein Ladesystem mit Ladesäulen, einem elektrischen Fahrzeug, einem Stromnetz und einer Recheneinheit;
- Figur 2: zeigt ein Verfahrensschema des Verfahrens zum netzdienlichen Laden eines elektrischen Fahrzeugs;
- Figur 3: zeigt zwei Parkplätze mit zwei Fahrzeugen und einer Ladesäule.

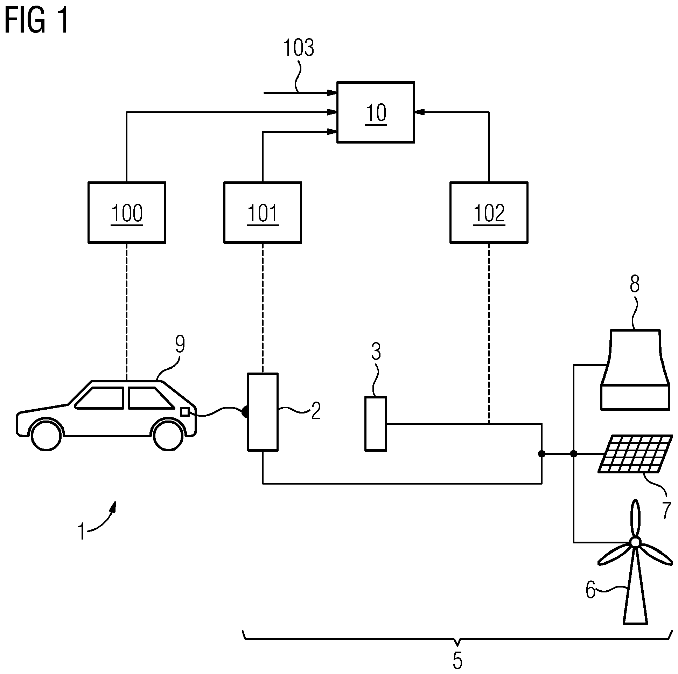

Figur 1 zeigt ein Ladesystem 1 mit einer ersten Ladesäule 2 und einer zweiten Ladesäule 3. Figur 1 zeigt weiterhin ein elektrisches Fahrzeug 9, welches an die erste Ladesäule 2 angeschlossen ist. Weiterhin zeigt Figur 1 ein Stromnetz 5, in welchem Strom mittels eines Windturbinenkraftwerks 6, einer Photovoltaikanlage 7 und eines Gaskraftwerks 8 erzeugt wird. Mittels unterschiedlicher Sensoren, welche in Figur 1 nicht näher gezeigt sind, werden Daten 100, 101, 102, 103 erfasst: Es werden Fahrzeugdaten 100 erfasst und an eine Recheneinheit 10 übertragen. Weiterhin werden Ladeinfrastrukturdaten 101 erfasst und an die Recheneinheit 10 übertragen. Es werden auch Netzdaten 102 erfasst, welche ebenso an die Recheneinheit 10 übertragen werden. Weiterhin werden Buchungsdaten 103 erfasst und an die Recheneinheit 10 übertragen.

Der Recheneinheit 10 wird weiterhin eine Zielfunktion für ein Optimierungsverfahren bereitgestellt, wobei die Zielfunktion die Information der Datensätze als Parameter umfasst. In der Recheneinheit 10 erfolgt dann das Durchführen eines Optimierungsprozesses. Dieser ermittelt unter Berücksichtigung der Ladeinfrastrukturdaten 101, der Buchungsdaten 103, der Netzdaten 102 und der Fahrzeugdaten 100, welche Ladesäule 2, 3 geeignet ist, um das elektrische Fahrzeug 9 netzdienlich zu laden.

Es können somit Ladesäulen 2, 3 ausgewählt werden, die sich nicht örtlich am nächsten zum Parkziel des elektrischen Fahrzeugs befinden, sondern solche, welche aufgrund einer erhöhten Bereitstellung von elektrischem Strom durch Wind- und/oder Sonnenkraft derzeit betrieben werden sollten, um einerseits das Netz zu stabilisieren und ein Abschalten/Regulieren der erneuerbaren Energien zu vermeiden. Weiterhin ist es möglich, über die Buchungsdaten für eine Fahrzeugflotte, insbesondere eine CarSharing Fahrzeugflotte, den Ladepunkt sowohl netzdienlich als auch für eine kommende Buchung des Fahrzeugs optimal auszuwählen.

Als Buchungsdaten 103 werden insbesondere Buchungsanfragen für einen Ladevorgang, Buchungsanfragen für ein Fahrzeug einer Fahrzeugflotte, eine aktuelle oder zukünftige gebuchte Route des Fahrzeugs erfasst und bereitgestellt.

Als Fahrzeugdaten 100 werden insbesondere der Ladestand des elektrischen Fahrzeugs und der Aufenthaltsort des elektrischen Fahrzeugs, sowie die minimale und maximale Ladeleistung und die Batteriekapazität des elektrischen Fahrzeugs erfasst und bereitgestellt.

Als Ladeinfrastrukturdaten 101 werden insbesondere die Auslastung der verfügbaren Ladesäulen, der Aufenthaltsort der Ladesäulen, defekte der Ladesäulen der Infrastruktur sowie der Preis für einen Ladeprozess oder für eine definierte Ladeleistung erfasst und bereitgestellt.

Als Netzdaten 102 werden insbesondere Daten eines Energiemanagementsystems, also aktuelle Netzauslastung, prognostizierte Netzauslastung, wobei die Prognose auf Erfahrungswerten von Last und Einspeisung basiert, sowie verfügbare Leistung des Stromnetzes ermittelt und bereitgestellt.

Weiterhin ist es möglich, Verkehrsdaten, insbesondere eines Verkehrsüberwachungssystems, Verkehrsleitsystems oder gesammelte anonymisierte GPS-Signale sowie Stau-Informationen zu erfassen und für die Optimierung bereitzustellen.

Vorteilhaft können durch das Zusammenführen und Optimieren der Ladeinfrastrukturdaten mit den Netzdaten, insbesondere der Netzauslastung am Ladepunkt, eine verfügbare Leistungskapazität des Netzbereichs für Buchungsanfragen, insbesondere betreffend den Preis oder die Nachhaltigkeit der elektrischen Energie, für das Ermitteln der geeigneten netzdienlichen Ladesäulen herangezogen werden.

Vorteilhaft können die ermittelten Daten zusätzlich Ortsnetzstationen, Trafostationen oder einer Leitwarte eines Stromnetzes bereitgestellt werden, um Maßnahmen wie das Einstellen eines regelbaren Ortsnetztransformators (RONT) oder dynamische Topologie-Änderungen durchzuführen. Zusätzlich ist es möglich die ermittelten Daten für planerische Zwecke, insbesondere für gezielten Netzausbau sowie für einen Ausbau der Ladeinfrastruktur für elektrische Fahrzeuge, einzusetzen und eine Analyse der verfügbaren Kapazitäten von Ladesäulen oder Sensitivitätsanalysen des entsprechenden Stromnetzes heranzuziehen.

Die Parameter, welche in die Zielfunktion eingehen, können mittels Gewichtungsfaktoren in Abhängigkeit der Buchungsdaten, welche insbesondere durch einen Nutzer bereitgestellt werden, angepasst werden. So kann zum Beispiel die Entfernung zu einem Ziel, die verfügbare Ladeleistung, der Preis eines Ladevorgangs oder die Steuerung des Ladeprozesses durch die Buchungsdaten mit einem Gewichtungsanteil versehen werden.

Das Ermitteln einer geeigneten Ladesäule kann für eine Anfrage zum Zeitpunkt der Buchung oder für eine zukünftige Planung einer Ladung erfolgen. Es können in anderen Worten Ladeplanungen oder Ladeprognosen durchgeführt werden. In diese Ladeplanungen werden insbesondere Verkehrsdaten aufgenommen und bereitgestellt, sowie Fahrzeugdaten, welche insbesondere in einem definierten Umgebungsbereich mittels GPS-Daten gemeldete elektrische Fahrzeuge erfassen, bereitgestellt, um eine Prognose über die Netzauslastung der Ladeinfrastruktur, in anderen Worten einen Ladeinfrastrukturbedarf zukünftiger elektrischer Leistung, vorhersagen zu können.

Insbesondere die Fahrzeugdaten, welche elektrische Fahrzeuge in einem definierten Umgebungsbereich erfassen, können durch den Einsatz von künstlicher Intelligenz um Prognosedaten, eine zukünftigen Aufenthaltswahrscheinlichkeit oder Ladebedarfs- Wahrscheinlichkeit eines elektrischen Fahrzeugs in dem definierten Umgebungsbereich ergänzt werden und somit in die Ermittlung einer Ladesäule für einen netzdienlichen Ladevorgang einbezogen werden.

In diesem Ausführungsbeispiel sind an den Ladesäulen 2,3 Messpunkte angeordnet, welche die Steuerung des Ladeprozesses erlauben, um eine Überlastung des Netzes 5 aufgrund einer erhöhten Ladeleistung zu reduzieren, indem die Ladeleistung an der entsprechenden Ladesäule 2,3 reduziert wird.

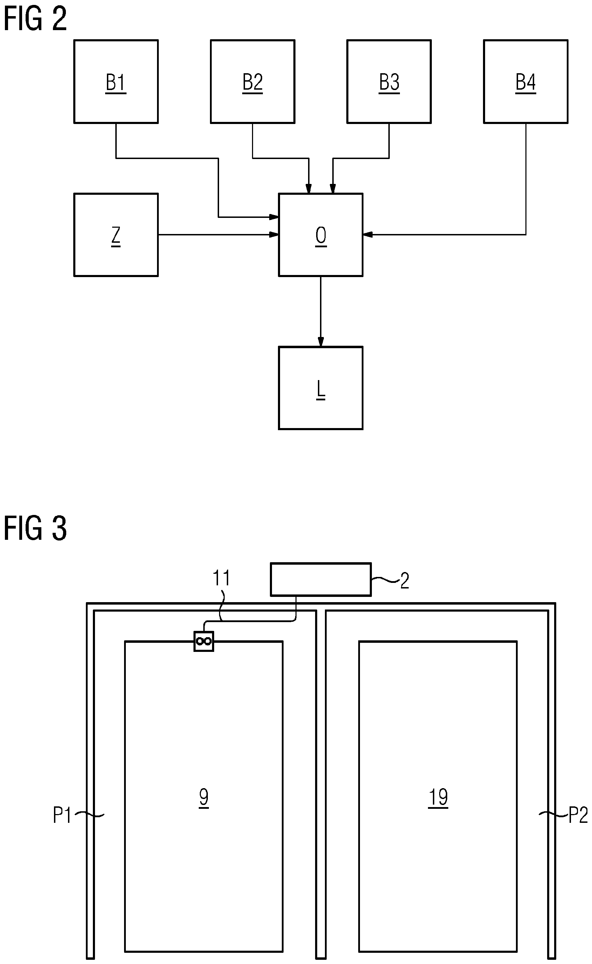

Figur 2 verdeutlicht das Verfahren zum netzdienlichen Laden eines elektrischen Fahrzeugs 9. Zunächst erfolgen, in diesem Beispiel parallel, Bereitstellungsschritte von Datensätzen. Die Bereitstellungsschritte können alternativ ebenso nacheinander erfolgen. In einem ersten Bereitstellungsschritt B1 erfolgt das Bereitstellen eines ersten Datensatzes von Fahrzeugdaten 100 wenigstens eines elektrisch betriebenen Fahrzeugs 9. In einem zweiten Schritt B2 erfolgt das Bereitstellen eines zweiten Datensatzes von Ladeinfrastrukturdaten 101. in einem dritten Schritt B3 erfolgt das Bereitstellen eines dritten Datensatzes von Buchungsdaten 103. In einem vierten Schritt erfolgt das Bereitstellen eines vierten Datensatzes von Netzdaten 102.

Weiterhin erfolgt der Verfahrensschritt Z nämlich des bereitstellen eine Zielfunktion für einen Optimierungsprozess, wobei die Zielfunktion die Information der Datensätze 100, 101, 102,103 als Parameter umfasst. Der Optimierungsprozess erfolgt in einem Verfahrensschritte O. Figur 2 verdeutlicht, dass die Datensätze 100, 101,102, 103 und die Zielfunktion dem Optimierungsschritt bereitgestellt werden. Mittels der Zielfunktion, wobei insbesondere basierend auf den Buchungsdaten die Parameter des Optimierungsprozesses gewichtet werden können, wird anschließend eine geeignete netzdienliche Ladesäule 2,3 in der Recheneinheit 10 ermittelt. In einem weiteren Verfahrensschritte L erfolgt dann das netzdienliche Laden des elektrischen Fahrzeugs 9. In diesem Ausführungsbeispiel erfolgt das netzdienliche Laden an der Ladesäulen 2.

In Figur 3 ist eine erste Parkfläche P1 und eine zweite Parkfläche P2 dargestellt. Für beide Parkflächen P1, P2 kann über eine erste Ladesäule 2 elektrische Energie für das Laden elektrischer Fahrzeuge 9,19 bereitgestellt werden. In diesem Ausführungsbeispiel erfolgt das An- und Abstecken des Ladesteckers an der Ladesäule 2 automatisch, also insbesondere mittels eines Roboters oder Roboterarms. In diesem Ausführungsbeispiel wurde als geeignete Ladesäule zum netzdienlichen Laden für das zweite elektrische Fahrzeug 19 die erste Ladesäule 2 ermittelt. Der Fahrer des zweiten elektrischen Fahrzeugs 19 parkt das zweite elektrische Fahrzeug 19 auf der zweiten Parkfläche P2 und kann die Parkfläche verlassen. Das erste Fahrzeug 9 wird zu diesem Zeitpunkt über die erste Ladesäule 2 geladen. Sobald der Ladevorgang für das erste elektrische Fahrzeug 9 abgeschlossen ist, wird automatisiert, insbesondere mittels eines Roboters, die Ladevorrichtung 11 vom ersten Fahrzeug 9 zum zweiten Fahrzeug 19 umgesteckt. Somit kann der Ladeprozess des zweiten Fahrzeugs 19 vorteilhaft beginnen, ohne dass der Fahrer vor Ort sein muss.

Eine nicht in den Figuren dargestellte alternative Lösung stellt das Laden über eine induktive Ladevorrichtung dar. Auch hier kann das Anordnen der induktiven Ladevorrichtung für einen Ladevorgang automatisiert erfolgen.

In einem weiteren, hier nicht dargestellten, Ausführungsbeispiel, kann ein autonom fahrendes elektrisches Fahrzeug eine ermittelte Ladesäule für ein netzdienliches Laden selbstständig anfahren, sobald der gebuchte Ladepunkt frei wird.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Ladesystem
- 2: erste Ladesäule
- 3: zweite Ladesäule
- 4: elektrisches Fahrzeug
- 5: Stromnetz
- 6: Windturbinen-Kraftwerk
- 7: Photovoltaik-Anlage
- 8: Gaskraftwerk
- 9: erstes elektrisches Fahrzeug
- 10: Recheneinheit
- 11: Ladevorrichtung
- 19: zweites elektrisches Fahrzeug

- 100: Fahrzeugdaten
- 101: Ladeinfrastrukturdaten
- 102: Netzdaten
- 103: Buchungsdaten

- P1: erster Parkplatz
- P2: zweiter Parkplatz

- B1: Bereitstellen von Fahrzeugdaten
- B2: Bereitstellen von Ladeinfrastrukturdaten
- B3: Bereitstellen von Buchungsdaten
- B4: Bereitstellen von Netzdaten
- Z: Bereitstellen einer Zielfunktion
- O: Durchführen eines Optimierungsprozesses
- L: Laden eines Fahrzeugs

## Patentansprüche

1. Verfahren zum netzdienlichen Laden eines elektrisch betriebenen Fahrzeugs (9,19) in einem Ladesystem (1) mit mehreren Schritten:
- Bereitstellen eines ersten Datensatzes von Fahrzeugdaten (100) wenigstens eines Fahrzeugs (9,19),
- Bereitstellen eines zweiten Datensatzes von Ladeinfrastrukturdaten (101),
- Bereitstellen eines dritten Datensatzes von Buchungsdaten (103),
- Bereitstellen eines vierten Datensatzes von Netzdaten (102),
- Bereitstellen einer Zielfunktion für ein Optimierungsverfahren, wobei die Zielfunktion die Information der Datensätze (100, 101, 102, 103) als Parameter umfasst,
- Durchführen eines Optimierungsprozesses, welcher unter Berücksichtigung der Datensätze (100, 101, 102, 103) eine geeignete Ladesäule (2,3) ermittelt, in einer Recheneinheit (10),
- Laden des Fahrzeugs (9, 19) an der ermittelten Ladesäule (2, 3).

2. Verfahren gemäß Anspruch 1, wobei als Fahrzeugdaten (100) Ladestand und Ort des Fahrzeugs (9,19) bereitgestellt werden.

3. Verfahren gemäß einem der vorhergehenden Ansprüche, wobei als Ladeinfrastrukturdaten (101) Standorte von Ladesäulen (2,3), Auslastungsdaten der Ladesäulen (2,3) und/oder fehlerhafte Ladesäulen (2,3) bereitgestellt werden.

4. Verfahren gemäß einem der vorhergehenden Ansprüche, wobei als Buchungsdaten (103) zeitliche Anforderungsdaten für eine Ladesäule (2,3) und örtliche Anforderungsdaten bereitgestellt werden.

5. Verfahren gemäß einem der vorhergehenden Ansprüche, wobei als Buchungsdaten (103) Nachhaltigkeitsanforderungsdaten oder Preisanforderungsdaten bereitgestellt werden.

6. Verfahren nach einem der vorhergehenden Ansprüche, wobei als Netzdaten (102) eine Netzauslastung und/oder eine verfügbare Leistung bereitgestellt werden.

7. Verfahren nach einem der vorhergehenden Ansprüche, wobei die ermittelte Ladesäule (2,3) an das Fahrzeug (9,19) übermittelt wird und eine Navigationseinrichtung, insbesondere des Fahrzeugs (9,19), eine Route zur ermittelten Ladesäule (2,3) ermittelt.

8. Verfahren nach einem der vorhergehenden Ansprüche, wobei eine netzdienliche Ladeleistung der Ladesäule (2,3) ermittelt wird und die Ladeleistung and die Ladesäule (2,3) und/oder das Fahrzeug (9,19) übermittelt wird.

9. Verfahren nach einem der vorhergehenden Ansprüche, wobei das Anschließen und/oder Abkoppeln des Fahrzeugs (9,19) automatisiert, insbesondere mittels eines Roboters oder Roboterarms, erfolgt.

10. Verfahren nach einem der vorhergehenden Ansprüche, wobei das Fahrzeug (9,19) als Teil einer Fahrzeugflotte in ein Fahrzeugbuchungssystem integriert ist und als Buchungsdaten (103) bereitgestellt werden.

11. Verfahren nach Anspruch 10, wobei eine Auswahl des Fahrzeugs (9,19) der Fahrzeugflotte basierend auf den Datensätzen (100, 101, 102, 103) und der ermittelten Ladesäule (2,3) erfolgt.

12. Verfahren nach einem der vorhergehenden Ansprüche, wobei als sechster Datensatz Verkehrsüberwachungsdaten bereitgestellt werden.

13. Verfahren nach einem der vorhergehenden Ansprüche, wobei alle Datensätze (100, 101, 102, 103) auf einem Cloudserver gespeichert werden.

14. Ladesystem (1) für das Laden eines elektrisch betriebenen Fahrzeugs (9,19) gemäß einem der vorhergehenden Ansprüche umfassend:
- wenigstens zwei Ladesäulen (2,3) und ein die Ladesäulen verbindendes Stromnetz (5), welche eine Ladeinfrastruktur bilden,
- eine Stromnetzüberwachungseinheit geeignet zum Bereitstellen von Netzdaten (102),
- eine Recheneinheit (10) geeignet zum Erfassen und Bereitstellen der Datensätze (100, 101, 102, 103) und Durchführen des Optimierungsprozesses.

15. Computerprogrammprodukt, welches direkt in einen Speicher einer programmierbaren Recheneinheit (10) eines Ladesystems (1) ladbar ist, mit Programmcode-Mitteln, um ein Verfahren nach einem der Ansprüche 1 bis 13 auszuführen, wenn das Computerprogrammprodukt in der Recheneinheit (10) des Ladesystems (1) ausgeführt wird.
